# EUROPEAN PATENT SPECIFICATION

(11) **EP 3 203 584 B1**
(45) Date of publication and mention of the grant of the patent: **03.06.2020**
(21) Application number: 14902913.4
(22) Date of filing: 29.09.2014
(51) Int. Cl.: H01R 4/50, H01R 11/12, H02G 7/05, H02G 15/04

(54) **A COMBINATION OF AN ANCHOR CLAMP AND OF A CONDUCTIVE CABLE WITH A POLYMER MATRIX COMPOSITE CORE**
KOMBINATION EINER ANKERKLEMME UND EINES LEITENDEN KABELS MIT EINEM POLYMERMATRIXVERBUNDKERN
COMBINAISON D'UN PINCE D'ANCRAGE ET D'UN CÂBLE CONDUCTEUR AVEC UN NOYAU COMPOSITE À MATRICE POLYMERE

(43) Date of publication of application: 09.08.2017
(73) Proprietor: Sociedad Anonima de Preformados Metalicos, 31868 Izurdiaga-Irurzun (Navarra) (ES)
(72) Inventor: RUIZ DE ERENTXUN LANZ, Asier, E-31868 Izurdiaga-Irurzun (Navarra) (ES)
(74) Representative: Urizar Anasagasti, Jesus Maria
(86) International application number: PCT/ES2014/070739
(87) International publication number: WO 2016/050992

(56) References cited:
- WO-A1-2011/103036
- WO-A1-2014/130609
- US-A1- 2005 006 129
- US-A1- 2005 006 129
- US-A1- 2007 062 718
- US-A1- 2007 062 718
- US-A1- 2008 201 946
- US-A1- 2011 053 437
- US-A1- 2013 068 501
- US-A1- 2013 192 870
- US-A1- 2014 273 670

## Description

A combination of an anchor clamp and of a conductive cable with a polymer matrix composite core

### Object of the invention

The present invention, as its title indicates, relates to a clamp for splicing and electrically connecting cables of the type having a resin composite core surrounded by a plurality of aluminum strands. This type of cable is commonly known by its acronym in English: PMCC (Polymer Matrix Composite Conductor).

There are ACSR (Aluminum Conductor Steel Reinforced) conductors that have a steel core around which at least one layer of strands are wrapped. The PMCC-type conductors use a carbon fiber core that is stronger and lighter than a traditional steel core of an ACSR cable. This type of cable continuously operates at high temperatures, meaning that it is substituting older technology cables worldwide. The clamp of the present invention has been especially designed for conductors with a composite core, although it can be used with other types of conductors.

### State of the art

Years ago, the company filing this patent developed a machine for tightening the conductor cables of overhead electrical lines, particularly cables that include a core formed by a steel or composite cable which is tightened between two points. That machine comprises conical retaining means through which the core of the conductor (2) that is to be mounted can pass. The aforementioned retaining means only act in one direction such that, when one pulls the cable, the other allows it to pass freely. The conical retentions have a longitudinal cavity, which at one of its ends finishes in a cone in which three or four clamps are located, which clamps are rough on the inside but smooth on the outside; the central strand of the cable passing therethrough is thus retained when a movement (of said cable or the clamp itself) occurs tending to insert the clamps at the bottom of the conical cavity. (column 4, line 58-67 ES 2276576).

The document US 3384704 discloses a high-voltage electrical connector for splicing stranded cables, which includes an outer splicing sleeve having a pair of conical fixing grips disposed in spaced relationship to the ends of the ferrule. The document WO 98/59393 also discloses an electrical connector for mechanically and electrically connecting two conductors together. The connector comprises a housing with a movable jaw formed by two conical grips that define two gripping surfaces for engaging the conductor disposed on different planes forming a circular gap for the electrical conductor, such that they exert clamping pressure on the cable, which is greater the more it pulls from the outer end.

The document US 2007062718 shows an anchor clamp for cables with a composite core, used to mechanically attach the core of a plunger that has a connector member on its front part for attaching to a coupling point and attaching the conductor wires of the cable. It has an inner piece with a frustoconical gap, inside of which a series of elongated claws are inserted, and with a configuration, which together form a truncated cone, the outside of which is equivalent to the area of the envelope and the inside to a cylindrical gap. These pawls are individually elements such that, by exerting a force on them that aims at introducing them into the bottom of the conical area of the envelope, they tend to reduce the diameter of the existing inner gap, such that the composite core is trapped in this envelope body. These pawls have a section corresponding to circular sectors 18, which define an outer circular surface that comes in contact with the entire surface of the cap of the envelope into which it is introduced.

The document US 2003194916 discloses a connector for power lines formed from an elongated steel tube that axially includes an aluminum sleeve.
The tube is subject to a mechanical compression operation such that the inner sleeve is immobilized at the same time that the outer cable filaments are secured.

The documents US 7882629 and US 7348489 disclose a connector for ACCC cables, which represents a variant of a similar fastener used for ACSR-type cables with a steel core. The connectors of both types are mechanically attached through the core of the cable, retaining it by means of a frustoconical bushing that couples to that core and is introduced inside the retention in a funnel-shaped gap that has a conical shape equivalent to the outside of said bushing, such that the greater the pull of the smaller base of the core, the more the core locks into the inner funnel housing. The aluminum wires connect to the retention at the end where the core enters it, and on the opposite side, the retention has mechanical fastening and electrical connection means.

US 2014273670 discloses an anchor clamp for conductors of the type formed from a core made up of a plurality of wire strands 21, preferably seven carbon steel wire strands; the core 13 of the strands 21 is surrounded by an outer core 22, also formed by a plurality of wire strands, preferably of aluminum. Occasionally, a tube 17 is placed outside the outer core 22, aimed at sheathing the conductor 12 in its entirety, which never only clamps the core of that conductor, which, in addition, is made from steel and not composite.

US2005006129 discloses a splice for composite core cables 101 comprised of an inner core 104 reinforced with glass fiber 102; there is no tube between the clamp wedge 202 and the core 101 to protect the composite core; the tube referred to as 210 in the figures is an aluminum housing that is placed outside of the aluminum conductors 106, as shown in detail in figure 2A of this document. WO2011/103036 relates generally to systems, assemblies and methods for making a connection to a composite cable.

### Description of the invention

The problem posed by the cables with a composite core is determined by the mechanical properties of this material, which has high tensile strength, but limited compressive strength and very low torsion strength; furthermore, any erratic or periodic deformation made to the core weakens its tensile response throughout its useful life. For this reason, cables of this type present a problem when they are fastened with anchor clamps, since traditional anchoring entails the application of an extraordinary compressive force on an area of the core, which has a length limited by the anchor clamp; and during fastening operations, there are moments of torsion (when pieces are threaded) and pinching on the core when different pressures are exerted upon it along the exposed surface, which will significantly deteriorate it. Solutions involving a wedge with multiple existing segments (for example, in US 2007062718) have the problem that they have an outer tangent frustoconical configuration equivalent to that of the gap in which they are introduced, such that the entire outer surface comes in contact with the surface of the gap, which makes it more difficult to slide the wedge into that gap.

The present invention provides for an anchor clamp that has a body that allows for the outer electric splicing of the outer aluminum threads with a connection blade; while it has an inner wedge-shaped clamping element of the composite core, with a cone-shape of variable geometry, to a steel connector member that makes up the mechanical fastening means of the cable. According to the invention, this clamp has:
- A tube made of a shapeable material and/or configuration, which protects the composite core in at least one area that has a length equal to that which will be subjected to a compressive force by clamping and fastening via a clamp wedge.
- A clamp wedge that has a characteristic configuration and structure. It is an element with a variable number of segments that have a configuration, such that together they define an inner gap with a diameter that is slightly smaller than that of the sheathing tube of the cable, which grip it on the outside during the assembly of the wedge, until they make it integrate into the composite core, making its longitudinal movement impossible. This wedge has an external frustoconical configuration, equivalent to a housing body; however, according to a particular characteristic of the invention, its outer geometry is variable, such that instead of having the entire outer surface rub on the gap of the housing body, only some outer generatricial (areas) lines are rubbed, (unlike US 2007062718), such that sliding within this frustoconical body is carried out in a much simpler way, with less friction, thus achieving a greater and more effective grip, while still using lengths shorter than any other conventional anchor. Also unlike US 2007062718, each wedge has an essentially circular section, such that by having a radius that is essentially smaller than that of the gap into which it is inserted, contact is only made between the wedge and the walls of the gap on some generatricial lines (areas), which also have variable width, progressing in the same direction of increase as the section of the truncated cone defined in its entirety.
- The aforementioned housing body of the wedge has an inner conical housing according to the wedges, such that when the wedge is placed in a position near the shapeable tube and the composite core of the cable, any pull of the core from its end corresponding to the smaller base of the attachment wedge means that it is introduced further into the housing and consequently, further clamps the shapeable tube that protects the core and as a result, a greater clamping force is exerted upon it. This body has on its front area, opposite the area through which the cable enters, and therefore, facing that which has the smaller base of its conical housing, an inner threaded cylindrical area to which the steel plunger of the anchor clamp is fastened.
- A steel plunger that has on its rear end, facing the housing body of the anchor wedge, a threaded end to be fastened to it; while the opposite end has a connector member that forms the fastening means of the clamp and therefore, of the cable. The threaded rear end is next to a corrugated area upon which the clamp body will be finally fastened; while the front end, before the connector member, has a collar that will allow for the fastening of the clamp body in a sealed way.
- The outer body of the clamp, of aluminum, has an elongated configuration, with two cylindrical end areas of different diameters and an intermediate conical joining area, which differentiates it from the existing designs, and avoids the need to incorporate an aluminum tube needed to adapt the diameter of the outer tube to the diameter of the conductor. The first cylindrical area adapts to the outside of the steel plunger, once fastened to the cable core. The intermediate conical area has an inner housing with a configuration according to the conical housing of the anchor wedge. As for the second cylindrical area, located at the rear, it has an inner gap according to that of the conductor cable. The two cylindrical areas compress themselves to establish fastening to the plunger of the clamp and to the conductor, respectively.
- The front end of the body of the clamp has a connection blade, integral to it, that has a emergence angled towards the front end, with a series of holes for the passage of the respective gripping means that enable the fastening of the clamp to the diversion body in order to make the electrical connection, independently of whether the connector plunger also includes electrical, as well as mechanical, means.

The essence of the invention focuses on a shapeable tube that protects the core of the cable in the area in which a compressive force must be exerted upon it in order to immobilize it by means of the gripping clamp wedge; as well as in the arrangement and configuration of that wedge, which allows this device to adopt any and all diameters of the core and cable, without changing its size. The shapeable tube is an element made from annealed aluminum, or from a material that is easily deformed under compression and adequate tenacity; it should have a longitudinal slot that facilitates its adaptation and the compression of the core of the cable, integrating it to form a single body that can respond in a far more stable way and with greater guarantees to the rotation of the core alone, as can be verified in different tests and trials that were carried out on a prototype of the invention.

The wedge is made up of segments joined together by fine lines of material, that, when compressed or pushed inside the body that envelopes the assembly, it deforms through these lines, adapting to that envelope and the protective tube of the core of the cable, deforming and coupling itself. In a preferred solution, this wedge is formed by 4 segments that are joined by 3 lines that are weakened and separated by a longitudinal opening, allowing the core of the cable to be introduced, once it has been protected by a shapeable tube; and exerting a pressure, pushing the wedge in a position within its housing on the conical body arranged for this purpose, until they immobilize the core in the desired position, such that when the tension of the cable pulls on the core from the rear end of the housing, the wedge further clamps it and therefore, they attach the core to the shapeable tube placed between both elements, without scratching or damaging it.

We reiterate, because of its significant importance for this clamp to function properly, that this wedge in its entirety has an external frustoconical configuration of a variable geometry. With this expression, we would like to indicate that the outer surface is not a completely circular section, but only in specific areas, radially arranged and uniformly distributed on the wedge, coinciding with the central generatrix of each one of them, which define generatricial lines (areas) of contact with the gap of the housing body, which greatly facilitates sliding inside of it by reducing friction and achieving a greater and more effective grip.

The body of the clamp is an element easily shaped by compression, such that it can be fastened to both the plunger of the anchor clamp as well as to the aluminum conductor. Between the two end areas of compression with different diameters, there is a conical area that adapts the two areas with different diameters and it is where the wedge and the envelope of said wedge is located, the wedge not being subjected to an external compressive force.

The invention also provides a method for fastening an aluminum cable with a composite core to an anchor clamp, as well as a tool to exert a pre-tension force during this method. The method comprises a first step of exposing a piece of the composite core of the external wires that cover it, sheathe the cable in the body of the clamp and the core in the wedge housing, until its rear end of a smaller diameter (equivalent to the outer diameter of the cable) butts against the aluminum wires. Next, the shapeable tube is introduced into the core and the assembly of the wedge into the envelope thereof, proceeding to manually push them until they butt against it; and with the help of a tool, which at the same time attaches or pulls the core by the end, it pushes the wedge within the envelope thereof, exerting a pre-compression force of the wedge on the assembly of the formed tube and composite core, thus preventing torsion from being exerted on the composite core. This torsion is exerted if threaded elements are used to exert this pre-compression force, as in the case of other designs. If the core protrudes from said envelope, it is cut where its mouth is before the plunger of the anchor clamp is threaded onto it, up to the limit marked by the threaded area on its rear end. Once the wedge fastens the core and the envelope thereof to the plunger of the clamp, the body of the clamp is then fastened to an existing collar on said plunger and afterwards, the clamp body is pressed into the two end cylindrical areas, which are separated by a frustoconical area coinciding with the envelope of the attachment wedge of the core; the wider front area is pressed into the plunger of the clamp and the narrower rear area is pressed on the cable, outside of the envelope of the wedge, so that it only affects the aluminum wires and hardly exerts pressure on the central core. Once the clamp is fastened to the cable, it is then mechanically immobilized through the connector member upon which the plunger of the clamp ends and is electrically connected by means of an associated connection blade to the body of the clamp.

The advantages of this clamp first reside in the simplicity of its fastening process on the end of the cable; and it is also worth noting the significant increase in tension that it can support with this solution, solely due to the inclusion of the shapeable tube which protects the composite core, the special design of the fastening wedge thereof and the method of fastening the wedge by means of the pre-tension tool, which prevents torsion from being applied to the core and thus weakening it. The possibility of using materials other than steel for most of its components improves connection and coupling between the different parts that comprise the clamp; at the same time, they facilitate the manufacture thereof and make it less costly.

### Description of the drawings

To complement the description that is being provided, and in order to facilitate the comprehension of the characteristics of the invention, a set of drawings is attached to this description, which, for the purposes of illustration and not limitation, represent the following:
Figure 1 shows plan and elevation views of an anchor clamp for cables with a composite core.
Figure 2 shows a perspective view of this clamp.
Figures 3 and 4 show, respectively, a longitudinal cross section of this clamp and a detailed view of its intermediate zone in which the fastening wedge (4) acts.
Figure 5 shows a perspective view, with all elements of this clamp unfolded in the mounted position.
Figure 6 shows detailed views of the shapeable tube (5) and the wedge (4) that make up one of the fundamental parts of this invention.
Figure 7 shows a transverse cross section of the wedge (4) at a point close to its smaller base.
Figures 8 and 9 shows longitudinal sections from different planes of the area (31) of the envelope (3) which includes the fastening wedge (4) of the core (2), through the shapeable tube (5).
Figures 10 and 11 shows a general perspective view and a longitudinal cross section of the tool (10) designed to mount the clamp on the core of the cable through a pre-compression process in which the wedge (4) and the tube (5) are in an operational position.

### Preferred embodiment of the invention

As can be observed in the figures referred to, the clamp of the present invention is used to anchor a cable (1), which is formed by a plurality of aluminum wires rolled around a composite core (2). Mechanical attachment must be made exclusively on the core (2), while the electrical connection must be established through the conductive part that envelopes the nucleus, so that this clamp integrates these two functions: on one hand, to join the core (2) to the steel plunger (6) that is on the front end of a connector member (64) that allows it to be attached to a coupling point and, on the other hand, to connect the bundle of wires of the cable (1) to the connection blade (8), which has a series of holes (81) for the passage of the respective gripping means, enabling the fastening of the clamp to the derivation body.

The elements that make up the mechanical gripping device of the core (2) to the plunger (6) are made up of a wedge (4), and are housed in an envelope (3) that has at least one conical area (31), which has coupling means to the plunger (6). Between the wedge (4) and the core (2), there is a tube (5) with an inner diameter that is essentially equal to that of the core, such that together with said wedge (4), it complies with its main function for the development of the invention.

Furthermore, the elements that allow for the electrical connection of the external aluminum wires of the cable (1) to the connection blade (8) are the clamp body (7), to which said blade (8) is welded, and the plunger (6), to which the body (7) is also joined, forming at the moment of connection of the cable an assembly that allows for mechanical clamping and its electrical derivation.

The envelope (3) of the wedge (4) has a first rear area (31) of a frustoconical configuration, in which the outer diameter of the smaller base corresponds to that of the cable (1). The front area of said envelope (3) is cylindrical and contains a threaded area (32) suitable for fastening the end (63) of the plunger (6) to it.

The wedge has a frustoconical configuration (4) that has an external configuration according to the envelope (3) and an internal gap (45) that incorporates the core (2) of the cable and more specifically, the tube (5) that protects the core in this area. This wedge (4) is made up of several segments, 2 or 3 or more elements (4 in the figures) through weakened lines (43), located around the gap (45) under the windows of separation (42) existing between two consecutive segments, forming an enveloping body with a longitudinal opening (44). This configuration allows, by fitting the wedge (4) into the envelope (3) and receiving a pressure aimed at causing its approximation, slight accommodation to take place, which reduces the perimeter of the cone, slightly deforming the weakened lines (43) and/or closing the longitudinal separations (42, 44).

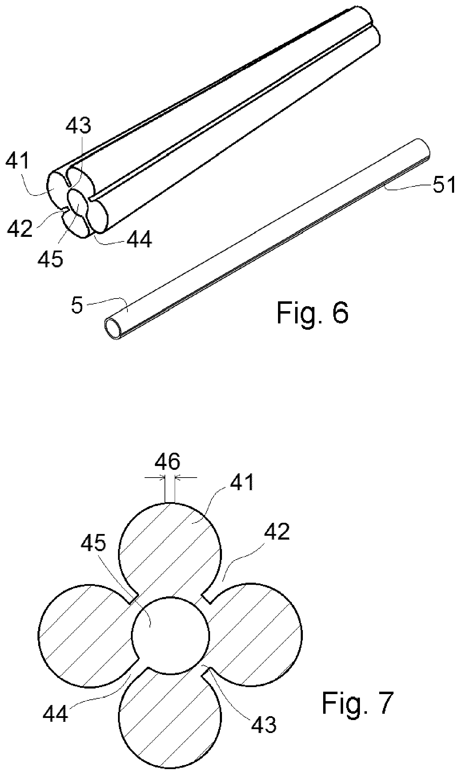

As shown in figures 6 to 9, for example, this wedge (4) has an external configuration similar to segments or a frustoconical rosette, with dimensions according to the housing body (31). Each one of the segments has an essentially circular section (41) and, since each one has a specific geometry, they have a radius that is essentially smaller than that of the gap of the portion (31) into which it is inserted; contact only occurs between each segment and the walls of the gap on generatricial lines (areas), those which, due to the decrease in the ratio between the radii (of each segment and of the gap), lead to a progressive increase of the width of the contact area which in the same way increases the truncated cone section that they define in its entirety, such that sliding of the wedge (4) into the envelope (3) occurs much more easily and therefore achieves greater and more effective grip of the tube (5) and consequently, of the core (2).

A small shapeable tube (5) is placed between the core (2) and the wedge (4), due to the material with which it is manufactured and its configuration, in which case it is provided with a generatricial slot (51) that slightly reduces its inner diameter when pressure is exerted on it in a uniform way through the wedge (4) as it is housed in the body (3). This tube (5) has a very important purpose in the present development, which consists of protecting the composite core (2) in the area in which it will be subjected to a compressive force allowing for its grip and fastening to the anchor clamp.

The wedge (4) can be made from a metal material, such as aluminum or steel, or another material. The tube (5) can be made from annealed aluminum or a shapeable material with adequate tenacity.

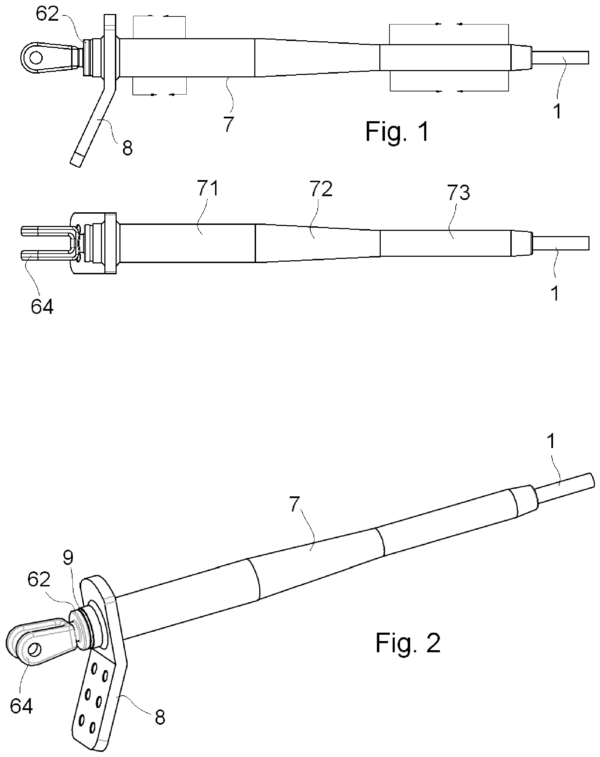

On one hand, the plunger (6) couples with the envelope (3) that includes the internal wedge (4) that anchors the core (2) of the cable; while on the other hand, it defines a fastening means of the body (7) of the clamp and the connection member of the anchor clamp. This plunger (6) has a cylindrical body that ends in a threaded area (63) on its rear end, which couples with the area (32) of the envelope (3); next, it has a wavy or rough surface (61) onto which the body (7) of the clamp is fastened in order to compress the outside of the piece in the area marked in figure 1. This element is completed with a collar (62) that couples with the front part of the body (7), with the interposition of a sealing gasket (9) and an end (64) that forms the connector member of the clamp that allows it to be attached to an anchor point.

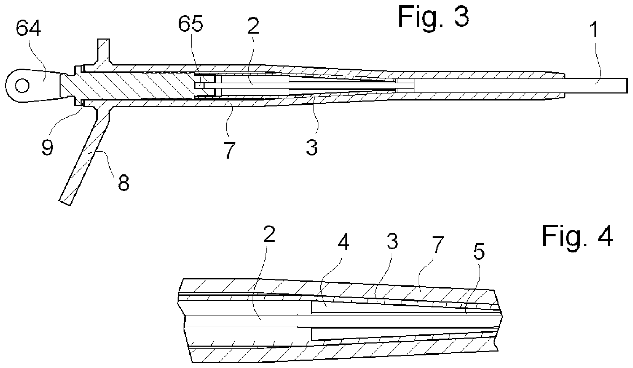

The body (7) of the clamp is observed in figures 1 to 3. It has two cylindrical areas (71-73) separated by a frustoconical area (72). The front area (71) has an inner diameter according to the area (61) of the plunger (6) upon which it is fastened, clamping it on the outside in the marked area between the arrows in figure 1, such that it crushes and joins both elements (6-7) in this area. The frustoconical area (72) incorporates the retention mechanism of the core formed by the wedge (4), the envelope (3) and the tube (5), (see figure 4). The area (73) has an inner diameter equivalent to that of the cable (1), to which it is fastened by clamping it on the outside in the marked area between the two arrows in figure 1; this way, the aluminum conductors are integrated and come in close contact with the body (7), which is also made from aluminum, forming mechanically or by molding the three areas (71-72-73), such that there are no welded joints or, therefore, hot points on the conductor. This special shape of the body (7) of the clamp avoids the need to incorporate an inner aluminum bushing to adapt its diameter to the diameter of the conductor and it is present in other designs.

The body (7) of the clamp has next to its front end the connection blade (8), which has a series of holes (81) for the passage of the respective gripping means, enabling the fastening of the clamp to the derivation body. In front of the blade (8) on the edge of the body (7) in its coupling with the collar (62), a sealing gasket (9) is placed.

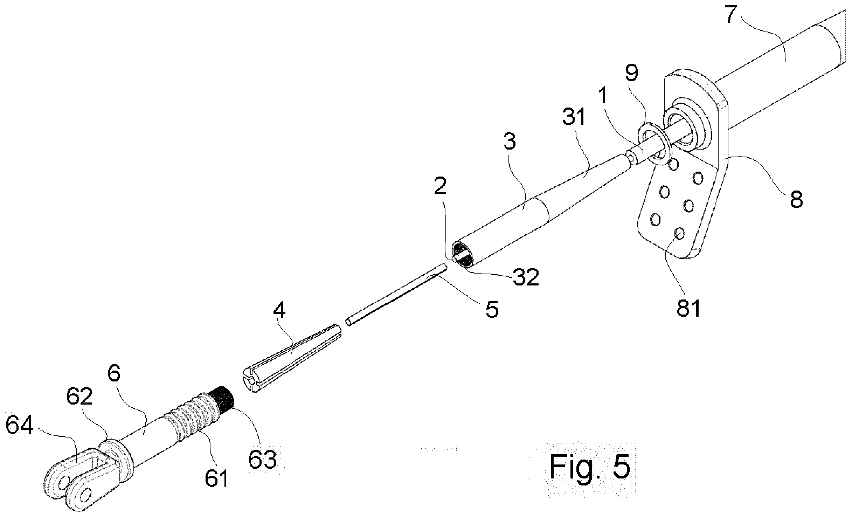

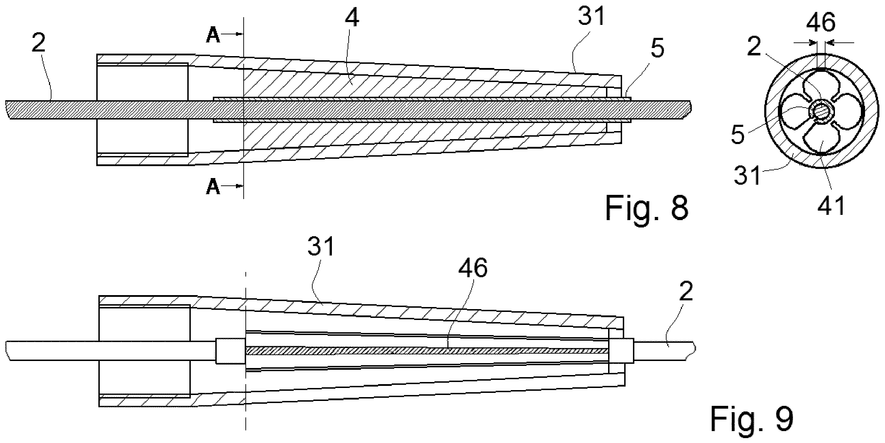

The assembly of this clamp is carried out on site, as shown in figure 5. The method comprises a first step consisting of exposing the composite core (2) of the cable (1) and sheathing the body (7) of the clamp around the conductor, with the connection blade towards the outside of the assembly. Next, the envelope (3) is inserted into the piece of core (2) freed from the aluminum wires until said envelope butts against their edge; the shapeable tube (5) on the core (2) is also introduced into the envelope (3) and the wedge (4), mounted around the tube (5), proceeding to push them until they butt against the conical bottom (31) of the envelope (3), applying a pre-compression force without torsion thereof, so that the tool shown in figure 9 is used, which at the same time attaches the core (2) at its end, pushing the wedge (4) inside the envelope (31). Once the nucleus with the wedge (4) is retained in the envelope (3) with the proper pressure, the plunger (6) is threaded onto it, the end of the core that protrudes into a small housing (65) existing in the center of the threaded area (63). The body (7) of the clamp is moved until the front end faces the collar (62), having taken care to place the sealing gasket (9) between the two. In this position, the cylindrical areas (71) and (73) of that body (7) are pressed to establish contact with the plunger (6) of the clamp and with the aluminum wires of the cable (1), respectively. The final phase consists of attaching the connector member (64) of the plunger (6) to the appropriate coupling point and making the electrical connection through the connector blade (8) integrated to the body (7).

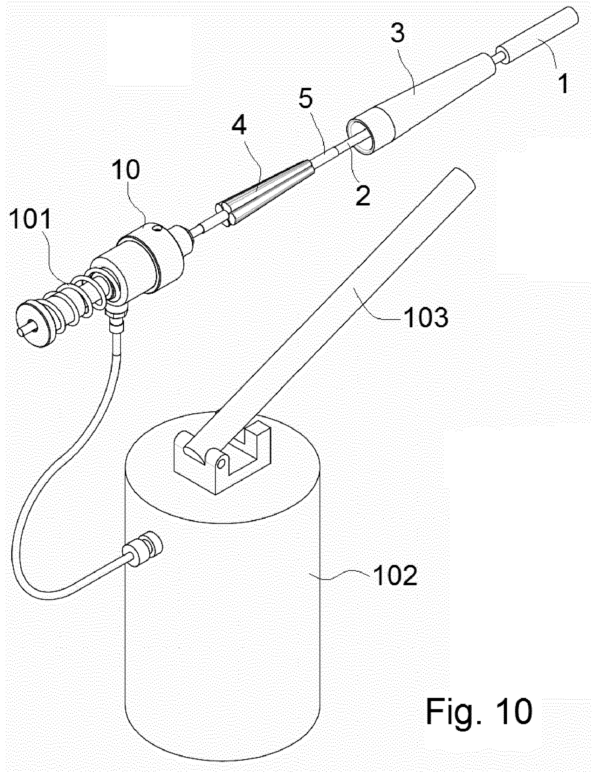

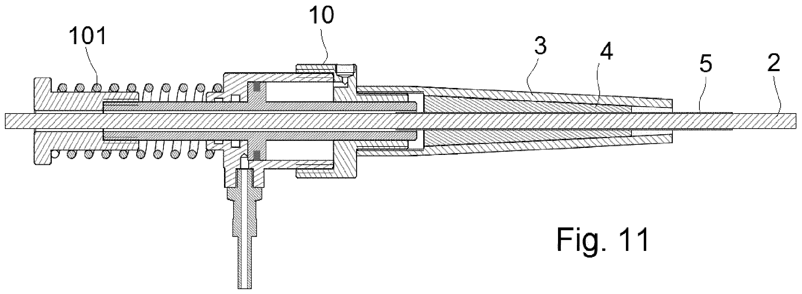

In figures 10 and 11, a tool (10) is observed that facilitates the immobilization operation of the core (2) with respect to the envelope (3) of the wedge (4) exerting a pre-compression force, without torsion. This tool is a simple pneumatic pump (102), to which pressure is applied by means of a lever (103), which has a spring (101) that pulls on the core (2), while the tool has a hollow pushing rod, inside of which the core (2) has been introduced, so that it pushes the assembly of the wedge (4) into the envelope (3), exerting a pre-compression force thereof in its definitive housing, while it butts against the edge of the conductors (2) that envelope the composite core (1). The pre-compression force that this tool exerts on the wedge (4) is enough to retain the core (2) until definitive clamping is achieved by threading the plunger (6) on the envelope (3); preventing, like in other conventional systems, the plunger (6) from exerting a force on the torsion of the core (2), since the material that it is comprised of is very sensitive to forces of this type; such that with this assembly technique, the core is only subjected to a compressive force transmitted through the shapeable tube (5) that protects it.

## Claims

1. A combination of an anchor clamp and of a conductive cable with a Polymer Matrix Composite (PMC) core, used to mechanically attach the core (2) of a plunger (6) that has a connector member (64) on the front part for attaching to a coupling point and attaching the conductor wires of the cable (1) to the connection blade (8) through the rear area of the body (7), which has an inner frustoconical gap that incorporates an envelope (3), that has an external frustoconical area equivalent to that gap, and internally houses a wedge (4) that is made up of several segments (41) that forms the fastening mechanism of the core (2) to the envelope (3), while the front area has a threaded area (32), suitable for fastening to it the end (63) of the plunger (6), while together they define an outer frustoconical configuration, equivalent to the area (31) of the envelope (3), and an inner gap (45) that incorporates a tube (5), shapeable, with an inner diameter equivalent to that of the core (2) on which it is sheathed; the segments that form the wedge (4) being joined by weakened areas (43) and/or slots or longitudinal windows (42, 44) that allow their accommodation aimed at reducing the diameter of the inner gap (45) existing between them, when pressure from the outside is exerted when they are introduced into the bottom of the conical area (31) of the envelope, **characterized in that** the segments (41) of the wedge are of an essentially circular section that externally defines areas of contact (46) through which they slide along the gap of the envelope (31); and
**in that** the tube (5) to be installed in the Polymer Matrix Composite PMC core (2) under the wedge (4) of the clamp, forming a protection element of the composite core, is made from annealed aluminum or another shapeable material.

2. The clamp, according to the any of the preceding claims, **characterized in that** the tube (5) has a generatricial slot (51) that allows its inner diameter to be slightly reduced when pressure is exerted on it in a uniform way from the outside.

3. The clamp, according to claim 1, **characterized in that** each one of the segments that form the wedge (4) have an essentially circular section (41), of a radius that is essentially smaller than that of the gap of the portion (31) into which it is inserted, such that contact only occurs between each segment and the walls of the gap on generatricial areas (46), which progressively increase the width as the truncated cone section increases, which they define in its entirety.

4. The clamp, according to any of the preceding claims, **characterized in that** the plunger (6) has: a) on its rear end, a threaded end (63) capable of being coupled to the front area (32) of the envelope (3); b) an intermediate area that has a wavy or rough surface (61) onto which the body (7) of the clamp is fastened; and c) in the front area, an end (64) that forms the connector member of the clamp that allows it to be attached to the coupling point;

5. The clamp, according to any of the preceding claims, **characterized in that** the body (7) of the clamp, which has a connection blade on its front end, defines along the same: a) a front area (71) that is equivalent internally to the area (61) of the plunger (6) upon which it is clamped; b) an intermediate frustoconical area (72) that incorporates the retention mechanism of the core included in the envelope (3); and c) a rear area (73) which has an internal diameter equivalent to that of the cable (1), to which it is fastened by clamping it on the outside.

6. The clamp, according to any of the preceding claims, **characterized in that** the body (7) of the clamp is made from aluminum from a mechanically formed piece to obtain cylindrical areas (71-73) separated by an intermediate frustoconical area (72).

7. The clamp, according to any of the preceding claims, **characterized in that** the end of the body (7), in its coupling with the collar (62), has a sealing gasket (9).

8. A method for assembling an anchor clamp for conductive cables with a Polymer Matrix Composite PMC core, **comprising** the steps of:
- exposing the Polymer Matrix Composite core (2) of the cable (1),
- sheathing the body (7) of the clamp around the conductor, with the connection blade towards the outside,
- inserting the envelope (3) into the piece of core (2) freed from the aluminum wires until said envelope butts against their edge,
- introducing the shapeable tube (5) on the core (2) into the envelope (3) and the wedge (4), mounted around the tube (5),
- pushing the wedge (4) inside the conical housing (31) of the envelope (3), while the core (2) is attached and pulled, exerting a pre-compression force without torsion thereof by means of the assembling tool (10) until it is retained by the wedge (4) in the envelope (3),
- threading the threaded end (63) of the plunger (6) onto the mouth (32) of the envelope (3),
- moving the body (7) of the clamp towards the front end until it butts against the collar (62), placing a sealing gasket (9) between the two,
- pressing with compression the cylindrical areas (71) and (73) of that body (7) until they establish contact with the plunger (6) of the clamp and with the aluminum conductors of the cable (1), respectively,
- attaching the connector member (64) of the plunger (6) to the appropriate coupling point; and
- making the electrical connection through the connector blade (8) integrated on the body (7).

## Patentansprüche

1. Kombination einer Ankerklemme und eines leitenden Kabels mit einem Polymermatrixverbund(PMC)-Kern, die zum mechanischen Anbringen des Kerns (2) eines Kolbens (6) verwendet wird, der ein Verbindungselement (64) an dem Vorderteil zum Anbringen eines Kupplungspunkts und zum Befestigen der Leiterdrähte des Kabels (1) an der Verbindungslasche (8) durch den hinteren Bereich des Körpers (7) aufweist, der einen inneren kegelstumpfförmigen Spalt aufweist, der eine Hülle (3) enthält, die einen diesem Spalt entsprechenden äußeren kegelstumpfförmigen Bereich aufweist und im Inneren einen Keil (4) aufnimmt, der aus mehreren Segmenten (41), die den Befestigungsmechanismus des Kerns (2) an die Hülle (3) bilden, während der vordere Bereich einen Gewindebereich (32) aufweist, der dazu geeignet ist, an ihm das Ende (63) des Kolbens (6) zu befestigen, während sie zusammen eine dem Bereich (31) der Hülle (3) entsprechende äußere kegelstumpfförmige Konfiguration definieren, und einem inneren Spalt (45) zusammengesetzt ist, der ein Rohr (5) enthält, das formbar ist, mit einem Innendurchmesser, der dem des Kerns (2) entspricht, den es umhüllt; wobei die Segmente, die den Keil (4) bilden, durch geschwächte Bereiche (43) und/oder Schlitze oder Längsöffnungen (42, 44) miteinander verbunden sind, die ihre Unterbringung ermöglichen, darauf abzielend, den Durchmesser des inneren Spalts (45) zu verringern, der zwischen ihnen vorhanden ist, wenn von außen Druck ausgeübt wird, wenn sie in den Boden der konischen Fläche (31) der Hülle eingeführt werden, **dadurch gekennzeichnet, dass** die Segmente (41) des Keils aus einem im Wesentlichen kreisförmigen Querschnitt bestehen, der von außen Kontaktbereiche (46) definiert, durch welche sie entlang des Spalts der Hülle (31) entlang gleiten; und
dadurch, dass das Rohr (5), das in dem Polymermatrixverbund(PMC)-Kern (2) unter dem Keil (4) der Klemme installiert werden soll, ein Schutzelement des Verbundkerns bildet, aus geglühtem Aluminium oder einem anderen formbaren Werkstoff hergestellt ist.

2. Klemme nach einem der vorhergehenden Ansprüche, **dadurch gekennzeichnet, dass** das Rohr (5) einen mantellinienartigen Schlitz (51) aufweist, der es seinem Innendurchmesser ermöglicht, leicht verringert werden, wenn von außen auf eine gleichförmige Art und Weise Druck auf es ausgeübt wird.

3. Klemme nach Anspruch 1, **dadurch gekennzeichnet, dass** jedes der Segmente, die den Keil (4) bilden, einen im Wesentlichen kreisförmigen Querschnitt (41) eines Radius aufweisen, der im Wesentlichen kleiner als der des Spalts des Teils (31) ist, in den es eingeführt wird, sodass der Kontakt nur zwischen jedem Segment und den Wänden des Spalts an mantellinienartigen Bereichen (46) auftritt, die schrittweise in dem Maße die Breite erhöhen, in dem sich der kegelstumpfförmige Teil erhöht, den sie in seiner Gesamtheit definieren.

4. Klemme nach einem der vorhergehenden Ansprüche, **dadurch gekennzeichnet, dass** der Kolben (6) Folgendes aufweist: a) an seinem hinteren Ende ein Gewindeende (63), das in der Lage ist an den vorderen Bereich (32) der Hülle (3) gekuppelt zu werden; b) einen Zwischenbereich, der eine wellige oder raue Oberfläche (61) aufweist, auf welcher der Körper (7) der Klemme befestigt wird; und c) im vorderen Bereich ein Ende (64), welches das Verbindungselement der Klemme bildet, das sein Anbringen an dem Kupplungspunkt ermöglicht.

5. Klemme nach einem der vorhergehenden Ansprüche, **dadurch gekennzeichnet dass** der Körper (7) der Klemme, welcher eine Verbindungslasche an seinem vorderen Ende aufweist, entlang dessen Folgendes definiert: a) einen vorderen Bereich (71), welcher dem kegelstumpfförmigen Zwischenbereich (61) des Kolbens (6) entspricht, auf den es geklemmt ist; b) einen kegelstumpfförmigen Zwischenbereich (72), welcher den Haltemechanismus des Kerns, der in der Hülle (3) eingeschlossen ist, enthält; und c) einen hinteren Bereich (73), welcher einen Innendurchmesser aufweist, welcher dem des Kabels (1) entspricht, an dem es durch Festklemmen an der Außenseite befestigt ist.

6. Klemme nach einem der vorhergehenden Ansprüche, **dadurch gekennzeichnet, dass** der Körper (7) der Klemme aus Aluminium aus einem mechanisch gebildeten Stück hergestellt wird, um zylindrische Bereiche (71-73), die durch einen kegelstumpfförmigen Zwischenbereich (72) voneinander getrennt sind, zu erhalten.

7. Klemme nach einem der vorhergehenden Ansprüche, **dadurch gekennzeichnet, dass** das Ende des Körpers (7) in seiner Kupplung mit dem Kragen (62) eine Dichtung (9) aufweist.

8. Verfahren zur Montage einer Ankerklemme für Kabel für leitende Kabel mit einem Polymermatrixverbund(PMC)-Kern, **umfassend** die folgenden Schritte:
- Freilegen des Polymermatrixverbundkerns (2) des Kabels (1),
- Umkleiden des Körpers (7) der Klemme um den Leiter herum, mit der Verbindungslasche nach außen,
- Einführen der Hülle (3) in das Stück des Kerns (2), das von den Aluminiumdrähten befreit ist, bis die Hülle gegen ihren Rand stößt,
- Einbringen des formbaren Rohres (5) auf dem Kern (2) in die Hülle (3) und den Keil (4), der um das Rohr (5) herum montiert ist,
- Drücken des Keils (4) innerhalb des konischen Gehäuses (31) der Hülle (3), während der Kern (2) befestigt und gezogen wird, wobei eine Vorpresskraft ohne Verdrehung davon durch das Montagewerkzeug (10) ausgeübt wird, bis er durch den Keil (4) in der Hülle (3) gehalten wird,
- Schrauben des Gewindeendes (63) des Kolbens (6) auf die Öffnung (32) der Hülle (3),
- Bewegen des Körpers (7) der Klemme in Richtung des vorderen Endes, bis er gegen den Kragen (62) stößt, wobei eine Dichtung (9) zwischen den beiden platziert wird,
- Pressen mit Kompression der zylindrischen Bereiche (71) und (73) dieses Körpers (7), bis er den Kontakt mit dem Kolben (6) der Klemme bzw. mit den Aluminiumleitern des Kabels (1) herstellt,
- Anbringen des Verbindungselements (64) des Kolbens (6) an dem entsprechenden Kupplungspunkt und
- Herstellen der elektrischen Verbindung durch die Verbindungslasche (8), die auf dem Körper (7) integriert ist.

## Revendications

1. Combinaison d'une pince d'ancrage et d'un câble conducteur avec un noyau en composite à matrice polymère (PMC), utilisée pour fixer mécaniquement le noyau (2) d'un piston (6) qui a un élément de raccordement (64) sur la partie avant pour la fixation à un point de couplage et la fixation des fils conducteurs du câble (1) à la platine de raccordement (8) à travers la zone arrière du corps (7), qui a un interstice tronconique interne qui incorpore une enveloppe (3), qui a une zone tronconique externe équivalente à cet interstice, et abrite à l'intérieur une cale (4) qui est constituée de plusieurs segments (41) qui forment le mécanisme de serrage du noyau (2) à l'enveloppe (3), tandis que la zone avant a une zone filetée (32), adaptée pour y serrer l'extrémité (63) du piston (6), tandis qu'elles définissent ensemble une configuration tronconique externe, équivalente à la zone (31) de l'enveloppe (3), et un interstice interne (45) qui incorpore un tube (5), modelable, avec un diamètre interne équivalent à celui du noyau (2) sur lequel il est gainé ; les segments qui forment la cale (4) étant reliés par des zones réduites (43) et/ou des fentes ou des fenêtres longitudinales (42, 44) qui permettent leur logement visant à réduire le diamètre de l'interstice interne (45) existant entre elles, lorsqu'une pression de l'extérieur est exercée quand elles sont introduites au fond de la zone conique (31) de l'enveloppe, **caractérisée en ce que** les segments (41) de la cale ont une section essentiellement circulaire qui définit extérieurement des zones de contact (46) à travers lesquelles ils coulissent le long de l'interstice de l'enveloppe (31) ; et **en ce que** le tube (5) à installer dans le noyau du composite à matrice polymère PMC (2) sous la cale (4) de la pince, formant un élément de protection du noyau composite, est fait à partir d'aluminium recuit ou d'un autre matériau modelable.

2. Pince, selon l'une quelconque des revendications précédentes, **caractérisée en ce que** le tube (5) a une fente génératrice (51) qui permet de réduire légèrement son diamètre interne lorsqu'une pression est exercée sur lui de manière uniforme depuis l'extérieur.

3. Pince, selon la revendication 1, **caractérisée en ce que** chacun des segments qui forment la cale (4) a une section essentiellement circulaire (41), d'un rayon qui est sensiblement plus petit que celui de l'interstice de la partie (31) dans laquelle il est inséré, de telle sorte que le contact se produit uniquement entre chaque segment et les parois de l'interstice sur les zones génératrices (46), qui augmentent progressivement la largeur à mesure que la section du cône tronquée augmente, qu'ils définissent dans son ensemble.

4. Pince, selon l'une quelconque des revendications précédentes, **caractérisée en ce que** le piston (6) a : a) à son extrémité arrière, une extrémité filetée (63) pouvant être couplée à la zone avant (32) de l'enveloppe (3) ; b) une zone intermédiaire qui a une surface ondulée ou rugueuse (61) sur laquelle le corps (7) de la pince est fixé ; et c) dans la zone avant, une extrémité (64) qui forme l'élément de raccordement de la pince qui lui permet d'être fixée au point de couplage.

5. Pince, selon l'une quelconque des revendications précédentes, **caractérisée en ce que** le corps (7) de la pince, qui a une platine de raccordement sur son extrémité avant, définit le long de celui-ci : a) une zone avant (71) qui est équivalente intérieurement à la zone (61) du piston (6) sur laquelle il est clampé ; b) une zone tronconique intermédiaire (72) qui incorpore le mécanisme de rétention du noyau inclus dans l'enveloppe (3) ; et c) une zone arrière (73) qui a un diamètre interne équivalent à celui du câble (1), auquel il est fixé en le clampant à l'extérieur.

6. Pince, selon l'une quelconque des revendications précédentes, **caractérisée en ce que** le corps (7) de la pince est fait à partir d'aluminium à partir d'une pièce formée mécaniquement pour obtenir des zones cylindriques (71-73) séparées par une zone tronconique intermédiaire (72).

7. Pince, selon l'une quelconque des revendications précédentes, **caractérisée en ce que** l'extrémité du corps (7), dans son couplage avec le collet (62), a un joint d'étanchéité (9).

8. Procédé d'assemblage d'une pince d'ancrage pour câbles conducteurs avec un noyau de composite à matrice polymère PMC, **comprenant** les étapes consistant à :
- exposer le noyau de composite à matrice polymère (2) du câble (1),
- gainer le corps (7) de la pince autour du conducteur, avec la platine de raccordement vers l'extérieur,
- insérer l'enveloppe (3) dans la pièce de noyau (2) libérée des fils d'aluminium jusqu'à ce que ladite enveloppe bute contre leur bord,
- introduire le tube malléable (5) sur le noyau (2) dans l'enveloppe (3) et la cale (4), montées autour du tube (5),
- pousser la cale (4) à l'intérieur du logement conique (31) de l'enveloppe (3), tandis que le noyau (2) est fixé et tiré, en exerçant une force de précompression sans la torsion de celui-ci au moyen de l'outil d'assemblage (10) jusqu'à ce qu'il soit retenu par la cale (4) dans l'enveloppe (3),
- gainer l'extrémité filetée (63) du piston (6) sur l'embouchure (32) de l'enveloppe (3),
- déplacer le corps (7) de la pince vers l'extrémité avant jusqu'à ce qu'il bute contre le collet (62), en plaçant un joint d'étanchéité (9) entre les deux,
- presser par compression les zones cylindriques (71) et (73) de ce corps (7) jusqu'à ce qu'elles établissent un contact avec le piston (6) de la pince et avec les conducteurs en aluminium du câble (1), respectivement,
- fixer l'élément de raccordement (64) du piston (6) au point de couplage approprié ; et
- réaliser le raccordement électrique à travers la platine de raccordement (8) intégrée sur le corps (7).
